(19) Europäisches Patentamt
European Patent Office
Office européen des brevets

(11) **EP 2 898 227 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **14766415.5**

(22) Anmeldetag: **05.09.2014**

(51) Int Cl.:
*F16B 13/12* *(2006.01)* *F16B 25/00* *(2006.01)*

(86) Internationale Anmeldenummer:
**PCT/EP2014/068934**

(87) Internationale Veröffentlichungsnummer:
**WO 2015/055350 (23.04.2015 Gazette 2015/16)**

(54) **VERANKERUNGSSYSTEM MIT EINEM HÜLSENELEMENT UND EINEM SPREIZELEMENT**

ANCHORING SYSTEM COMPRISING A SLEEVE ELEMENT AND AN EXPANSION ELEMENT

SYSTÈME D'ANCRAGE COMPRENANT UN ÉLÉMENT DE MANCHON ET UN ÉLÉMENT À EXPANSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2013 DE 102013111390**
**20.12.2013 DE 102013114653**

(43) Veröffentlichungstag der Anmeldung:
**29.07.2015 Patentblatt 2015/31**

(73) Patentinhaber: **Ludwig Hettich Holding GmbH & Co. KG**
**78713 Schramberg-Sulgen (DE)**

(72) Erfinder: **HETTICH, Ulrich**
**78713 Schramberg (DE)**

(74) Vertreter: **Lucke, Andreas**
**Boehmert & Boehmert**
**Anwaltspartnerschaft mbB**
**Patentanwälte Rechtsanwälte**
**Pettenkoferstrasse 20-22**
**80336 München (DE)**

(56) Entgegenhaltungen:
**EP-A1- 0 171 745        EP-A2- 1 895 173**
**US-A1- 2003 026 675**

EP 2 898 227 B1

**Beschreibung**

GEBIET DER ERFINDUNG

Die vorliegende Erfindung liegt auf dem Gebiet der Verankerungs- und Verbindungstechnik. Insbesondere betrifft sie ein Verankerungssystem mit einem Hülsenelement und einem Spreizelement zur Verankerung in einem Bohrloch.

HINTERGRUND DER ERFINDUNG

Verankerungssysteme mit Spreizelementen und Hülsenelementen aus Kunststoff und entsprechende Verfahren zur Verankerung in einem Verankerungsgrund, beispielsweise Beton oder Mauerwerk, sind aus dem Stand der Technik bekannt.

Zur Herstellung einer Verankerung mit einem derartigen Verankerungssystem wird zunächst das Hülsenelement, beispielsweise ein Dübel, in ein Bohrloch im Verankerungsgrund eingesetzt. Anschließend wird das Spreizelement, beispielsweise eine Schraube aus Stahl, mit einem Gewindeabschnitt in das Hülsenelement eingeschraubt. Üblicherweise hat das Spreizelement einen Außendurchmesser, beispielsweise einen Kerndurchmesser, der zumindest abschnittsweise größer als der Innendurchmesser des Hülsenelements ist. Aufgrund dieses Übermaßes wird beim Einschrauben Kunststoff des Hülsenelements nach radial außen verdrängt, so dass ein Spreizdruck erzeugt wird, mit dem das Hülsenelement gegen die Bohrlochwand gedrückt wird.

Der Ausziehwiderstand, der überwunden werden muss, um das Hülsenelement aus dem Bohrloch herauszuziehen, wird maßgeblich durch den Spreizdruck und durch den Reibkoeffizienten zwischen dem Hülsenelement und der Bohrlochwand bestimmt. Der Reibkoeffizient ist sowohl vom Material des Verankerungsgrunds und des Hülsenelements als auch von der Oberflächenbeschaffenheit bzw. Oberflächengeometrie der Bohrlochwand und der Außenfläche des Hülsenelements abhängig.

Durch eine Erhöhung des Übermaßes des Spreizelementdurchmessers gegenüber dem Innendurchmesser des Hülsenelements kann der Spreizdruck und damit der Ausziehwiderstand jedoch nicht beliebig vergrößert werden, weil gleichzeitig auch der Wärmeeintrag in den Kunststoff erhöht wird. Durch den Wärmeeintrag können die Kunststoffeigenschaften beeinträchtigt werden, was wiederum die Steigerung des Ausziehwiderstands begrenzt.

Aus der EP 1895173 A2 ist eine Spreizschraube für eine aufweitbare Dübelhülse bekannt. Die Spreizschraube umfasst einen Gewindeabschnitt, der neben einem ersten Gewindegang, der sich über diesen Abschnitt hinaus erstreckt, einen weiteren Gewindegang aufweist.

Aus der EP 0171745 A1 ist ein aus einem Kunststoffspreizdübel und einer Befestigungsschraube bestehender Befestigungssatz bekannt. Die Befestigungsschraube weist unterschiedliche Gewindeabschnitte auf, die sich beispielsweise durch unterschiedliche Außendurchmesser unterscheiden können oder dadurch, dass einer der Gewindeabschnitte ein einschneidendes, schlankes Gewinde besitzt, wohingegen der andere Gewindeabschnitt als Trapezgewinde ausgebildet ist.

ZUSAMMENFASSUNG DER ERFINDUNG

Der vorliegenden Erfindung liegt die Aufgabe zugrunde, ein Verankerungssystem mit einem Hülsenelement und einem Spreizelement zur Verfügung zu stellen, mit dem größere Ausziehwiderstände erzeugt werden können als mit vergleichbaren Verankerungssystemen des Stands der Technik. Eine weitere Aufgabe liegt darin, ein Verfahren zum Befestigen eines Objektes an einem Verankerungsgrund anzugeben, das sich eines solchen Verankerungssystems bedient.

Diese Aufgabe wird durch ein Verankerungssystem des Anspruchs 1 und durch ein Verfahren nach Anspruch 14 gelöst. Vorteilhafte Weiterbildungen und Ausführungsformen sind in den abhängigen Ansprüchen angegeben.

Das erfindungsgemäße Verankerungssystem umfasst ein Hülsenelement und ein Spreizelement. Das Hülsenelement besteht zumindest teilweise aus Kunststoff und kann in ein Bohrloch eingesetzt werden. Das Spreizelement weist einen Gewindeabschnitt auf, der in das Hülsenelement einschraubbar ist, wobei das Spreizelement geeignet ist, das Hülsenelement beim Einschrauben radial zu spreizen. Der Gewindeabschnitt hat eine Gewindesteigung, die sich entlang des Gewindeabschnitts verändert.

Wenn der Gewindeabschnitt des Spreizelements in das Hülsenelement eingeschraubt wird, wird das Hülsenelement nicht nur in radialer Richtung gespreizt, sondern aufgrund der sich entlang des Gewindeabschnitts verändernden Gewindesteigung zusätzlich in axialer Richtung verspannt. Diese in axiale Richtung des Hülsenelementes wirkende Spannung kann zu einer Verkürzung des Hülsenelementes führen, wodurch eine zusätzliche Aufspreizung erzeugt werden kann, die zu einer weiteren Steigerung des Spreizdrucks führen kann.

Die durch das Spreizelement erzeugte axiale Spannung im Hülsenelement kann weiterhin zu Relativerschie-

bungen zwischen der Außenfläche des Hülsenelementes und der Bohrlochwand in axialer Richtung führen, sodass eine geometrische Verzahnung zwischen der Außenfläche des Hülsenelementes und der Bohrlochwand erzeugt wird. Dies hat eine Erhöhung des Reibungswiderstandes zwischen der Bohrlochwand und dem aufgespreizten Hülsenelement zur Folge.

Sowohl die Erhöhung des Spreizdruckes durch eine Verkürzung des Hülsenelements als auch die Erhöhung des Reibungswiderstandes tragen zu einem erhöhten Ausziehwiderstand bei. Ein weiterer Vorteil des erfindungsgemäßen Verankerungssystems ist eine verbesserte Ausziehsteifigkeit. Wenn eine Ausziehlast an eine Verankerung angelegt wird, dann gibt die Verankerung der Last üblicherweise erst eine gewisse Wegstecke nach bzw. überwindet einen gewissen Schlupf, bevor die Verankerung der Last ihren maximalen Widerstand entgegengesetzt und der Last nicht weiter nachgibt. Je geringer dieses Nachgeben beim Ausziehen einer Verankerung ist, desto höher ihre Ausziehsteifigkeit. Die spannungsinduzierte Relativverschiebung und die dadurch bedingte geometrische Verzahnung ermöglicht eine Verringerung des Schlupfs zwischen dem Hülsenelement und der Bohrlochwand. Durch den geringeren Schlupf kann die Ausziehsteifigkeit verbessert werden.

In einer Ausführungsform weist der Gewindeabschnitt einen ersten Abschnitt mit einer ersten Gewindesteigung und einen zweiten Abschnitt mit einer zweiten Gewindesteigung auf, wobei die zweite Gewindesteigung kleiner als die erste Gewindesteigung ist. Aufgrund von unterschiedlichen Gewindesteigungen in unterschiedlichen axial beabstandeten Abschnitten kann erreicht werden, dass die relative Verschiebung zwischen dem Hülsenelement und dem Spreizelement beim Einschrauben in unterschiedlichen Abschnitten unterschiedlich ist. Bei dieser Ausführungsform ist die Relativverschiebung im Bereich des ersten Abschnitts größer als im Bereich des zweiten Abschnitts. Dadurch kann die oben genannte axiale Verspannung des Hülsenelements erzeugt werden.

Die erste und/oder die zweite Gewindesteigung kann bzw. können ihrerseits im Wesentlichen konstant sein. Wenn beispielsweise sowohl die erste als auch die zweite Gewindesteigung konstant sind, wird das Hülsenelement vor allem zwischen dem ersten und dem zweiten Gewindeabschnitt verspannt, jedoch nicht oder zumindest in geringerem Umfang auf dem ersten und dem zweiten Gewindeabschnitt selbst.

In einer Ausführungsform ist der erste Abschnitt näher an einem führenden Ende des Spreizelements angeordnet als der zweite Abschnitt. Aufgrund seiner kleineren Gewindesteigung wird der nachfolgende zweite Abschnitt pro Umdrehung weniger weit in das Hülsenelement eingeschraubt bzw. bewegt sich "langsamer" in Bezug auf das Hülsenelement als der führende erste Abschnitt. Dadurch wird das Hülsenelement axial in Richtung auf das nachlaufende Ende bzw. ein zu befestigendes Anbauteil verspannt. Diese Ausführungsform ist besonders vorteilhaft beispielsweise bei Verankerungen in Beton und in Mauerwerk, weil sichergestellt wird, dass die Hülse nicht weiter in das Bohrloch gezogen wird, was bei Beton oder Mauerwerk unerwünscht ist.

In einer anderen Ausführungsform ist der zweite Abschnitt näher an dem führenden Ende des Spreizelements angeordnet als der erste Abschnitt, also der Abschnitt mit vergleichsweise geringerer Steigung. Diese Ausführungsform ist besonders vorteilhaft für Verankerungen in porösen Werkstoffen, wie zum Beispiel Gasbeton oder Blähbeton.

Zwischen dem ersten und dem zweiten Abschnitt kann das Spreizelement weiterhin einen Übergangsabschnitt aufweisen, auf dem die Gewindesteigung in Richtung auf den zweiten Abschnitt abnimmt, insbesondere kontinuierlich abnimmt. Alternativ kann jedoch zwischen dem ersten und dem zweiten Abschnitt ein gewindefreier Abschnitt vorgesehen sein. In diesem Fall umfasst der in das Hülsenelement einschraubbare Gewindeabschnitt zwei voneinander getrennte Teilgewinde unterschiedlicher Steigung, die den "ersten" bzw. "zweiten" Gewindeabschnitt bilden. Diese Variante lässt sich einfacher herstellen als die Variante, bei der der erste und der zweite Gewindeabschnitt durch einen Übergangsabschnitt verbunden sind.In einer bevorzugten Ausführungsform beträgt die Länge des ersten Abschnitts zwischen 50 % und 70 %, insbesondere etwa 60% der Länge des Gewindeabschnitts.

Die Länge des zweiten Abschnitts beträgt vorzugsweise zwischen 10% und 30%, insbesondere etwa 20% der Länge des Gewindeabschnitts.

Die Länge des Übergangsabschnitts beträgt vorzugsweise zwischen 10% und 30%, insbesondere etwa 20% der Länge des Gewindeabschnitts.

Die zweite Gewindesteigung beträgt vorzugsweise 85% oder weniger, besonders vorzugsweise 70% oder weniger der ersten Gewindesteigung. Ferner beträgt die zweite Gewindesteigung 40% oder mehr, besonders vorzugsweise 55% oder mehr der ersten Gewindesteigung. Es hat sich gezeigt, dass mit diesen Steigungsunterschieden hohe Ausziehwerte und eine hohe Ausziehsteifigkeit erreicht werden können.

In einer vorteilhaften Ausführungsform hat die Gewindesteigung in dem Gewindeabschnitt an einer Stelle, die sowohl vom führenden Ende als auch vom nachlaufenden Ende des Gewindeabschnittes beabstandet ist, ein lokales Extremum, insbesondere ein lokales Minimum. Im Bereich eines lokalen Minimums der Gewindesteigung kann das Hülsenelement axial gestaucht werden, wodurch das Hülsenelement effektiv aufgespreizt wird, gleichzeitig aber auch eine geometrische Verzahnung zwischen der Außenfläche des Hülsenelements und der Bohrlochwand erzeugt werden kann.

Die Gewindesteigung kann auch zwei oder mehr lokale Extrema, insbesondere lokale Minima aufweisen. Insbesondere kann der Wert der Steigung in axialer Richtung des Gewindeabschnittes oszillieren, so dass das Hülsen-

EP 2 898 227 B1

element abwechseln gestreckte und gestauchte Abschnitte annimmt.

In einer besonders vorteilhaften Ausführungsform umfasst der Gewindeabschnitt einen Abschnitt niedriger Steigung mit einer gewissen Länge 1, innerhalb dessen die Steigung kleiner ist als an den jeweiligen Enden des Gewindeabschnitts. In diesem Abschnitt niedriger Steigung kann das Hülsenelement dann gestaucht werden und so zu einem zuverlässigen Halt im Bohrloch führen. Konkret sei angenommen, dass der Gewindeabschnitt eine Länge L hat, die Steigung am führenden Ende des Gewindeabschnitts einen Wert $p_1$, am nachlaufenden Ende einen Wert $p_2$ und einen minimalen Wert von $p_{min}$ aufweist, der kleiner als $p_1$ und $p_2$ ist. Dann gilt für die Steigung $p$ innerhalb des Abschnitts niedriger Steigung:

$$p \leq p_{min} + \left( \frac{p_1 + p_2}{2} - p_{min} \right) * 0,7,$$

vorzugsweise

$$p \leq p_{min} + \left( \frac{p_1 + p_2}{2} - p_{min} \right) * 0,4.$$

Für die Länge 1 des Abschnitts niedriger Steigung gilt dabei $1 \geq 0,2 * L$, vorzugsweise $1 \geq 0,4 * L$ und $1 \leq 0,9 * L$, vorzugsweise $1 \leq 0,75 * L$.

In einer weiteren Ausführungsform verläuft die Gewindesteigung nicht über den gesamten Gewindeabschnitt kontinuierlich, sondern weist zumindest eine abrupte Änderung auf.

In einer anderen Ausführungsform verändert sich die Gewindesteigung entlang des Gewindeabschnitts kontinuierlich, insbesondere verändert sie sich im Wesentlichen entlang des gesamten Gewindeabschnitts kontinuierlich.

Vorzugsweise ist das Hülsenelement ein Dübel, der aus einem Polyamid, insbesondere aus dem Polyamid PA6 und/oder aus dem Polyamid PA66 besteht.

Das Spreizelement ist vorzugsweise eine Schraube, insbesondere eine Stahlschraube.

KURZBESCHREIBUNG DER FIGUREN

Weitere Vorteile und Merkmale der vorliegenden Erfindung werden im Folgenden beispielhaft anhand der beigefügten Zeichnungen erläutert, in denen gleiche Bezugszeichen für gleiche Elemente verwendet sind. Darin zeigen:

Figur 1a          ein Spreizelement für ein erfindungsgemäßes Verankerungssystem gemäß einer bevorzugten Ausführungsform,

Figur 1b          den Verlauf der Gewindesteigung entlang des Gewindeabschnitts des Spreizelements aus Figur 1a,

Figur 2a          eine Schnittansicht eines herkömmlichen Kunststoffdübels,

Figuren 2b - d          eine Abfolge von Schnittansichten des Kunststoffdübels von Figur 2a, in welchen eine herkömmliche Schraube zu dessen Spreizung eingeschraubt wird,

Figur 2e          eine Schnittansicht des Kunststoffdübels von Figur 2a, in welchen eine Schraube ähnlich der Schraube 10 von Fig. 1a eingeschraubt ist,

Figuren 3a und b          aus Versuchen ermittelte Werte für Ausziehkräfte für drei verschiedene Dübeltypen, wobei die in Figur 3a dargestellten Werte für ein Verankerungssystem nach dem Stand der Technik und die in Figur 3b dargestellten Werte für ein erfindungsgemäßes Verankerungssystem mit dem Spreizelement aus Figur 1a ermittelt wurden,

Figuren 4a und 4b          aus Versuchen ermittelte Wegwerte für drei verschiedene Dübeltypen, wobei die in Figur 4a dargestellten Werte für ein Verankerungssystem des Standes der Technik und die in Figur 4b dargestellten Werte für ein erfindungsgemäßes Verankerungssystem mit dem Spreizelement aus Figur 1a ermittelt wurden,

Figuren 5a bis 5c          Kraft-Weg-Diagramme mit Messverläufen, aus denen die in den Figuren 3 und 4 dargestellten

4

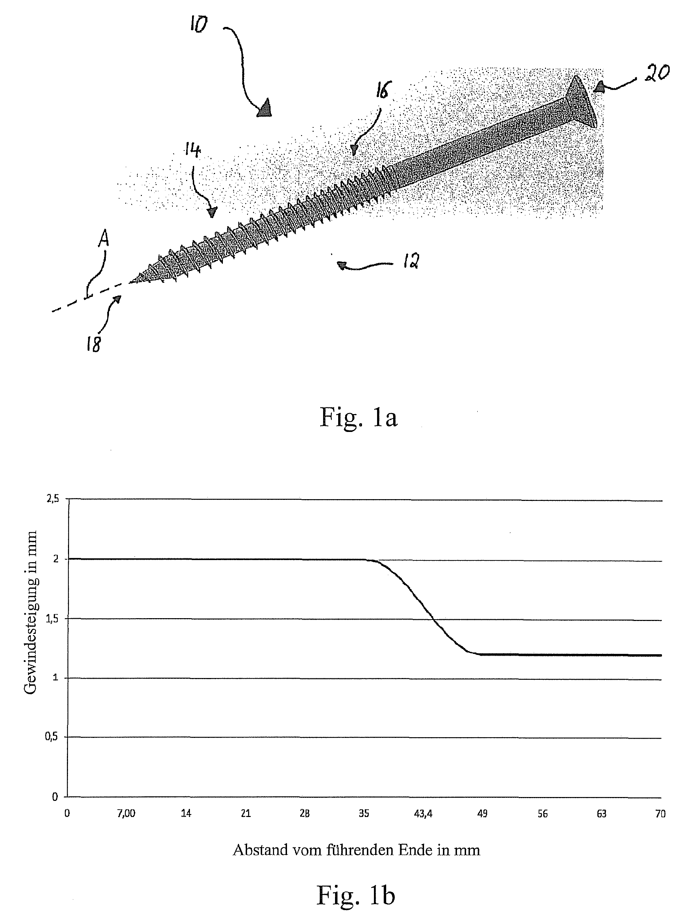

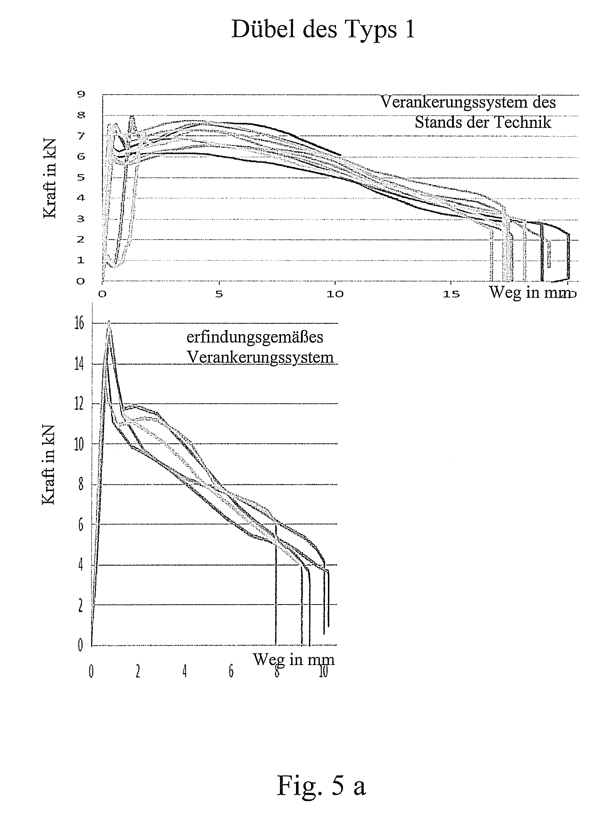

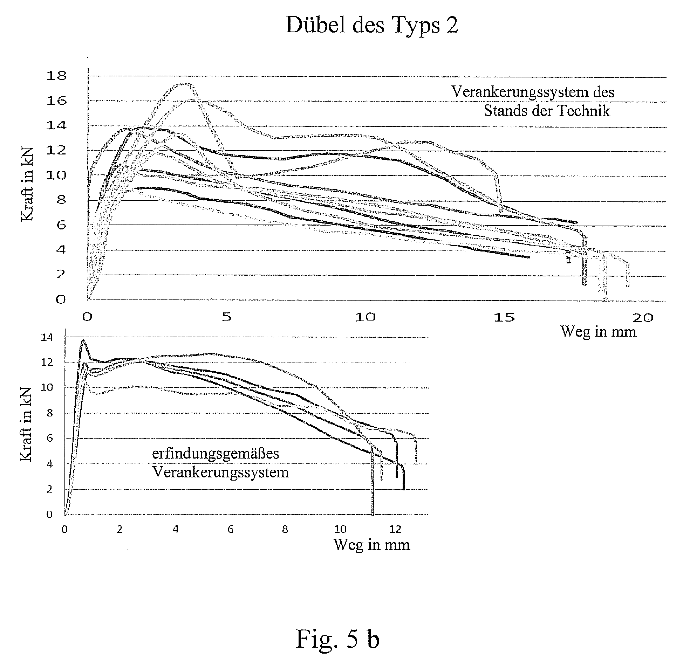

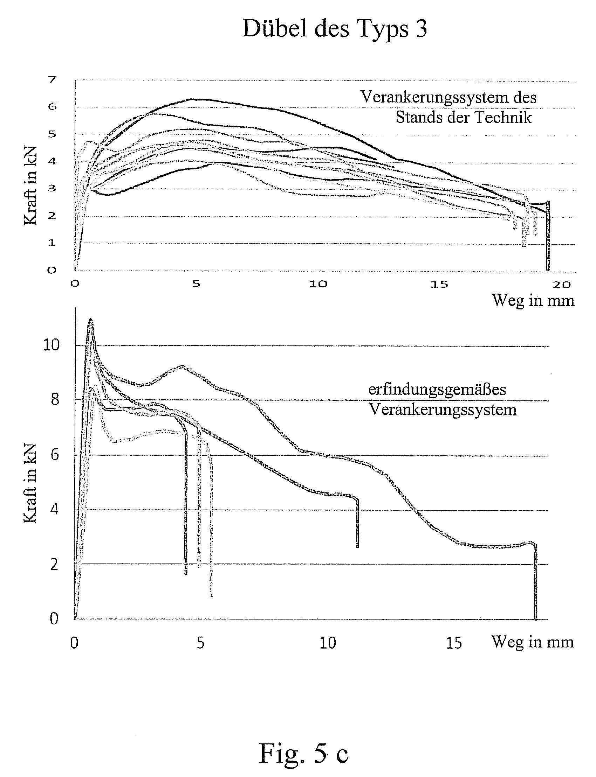

Werte ermittelt wurden, wobei in dem jeweils oben dargestellten Diagramm Verläufe für ein Verankerungssystem des Standes der Technik und in dem jeweils unten dargestellten Diagramm Verläufe für ein erfindungsgemäßes Verankerungssystem mit dem Spreizelement aus Figur 1a dargestellt sind und wobei die Verläufe der Figur 5a mit einem Dübel eines ersten Typs, die Verläufe der Figur 5b für einen Dübel eines zweiten Typs und die Verläufe der Figur 5c für einen Dübel eines dritten Typs gemessen wurden, und

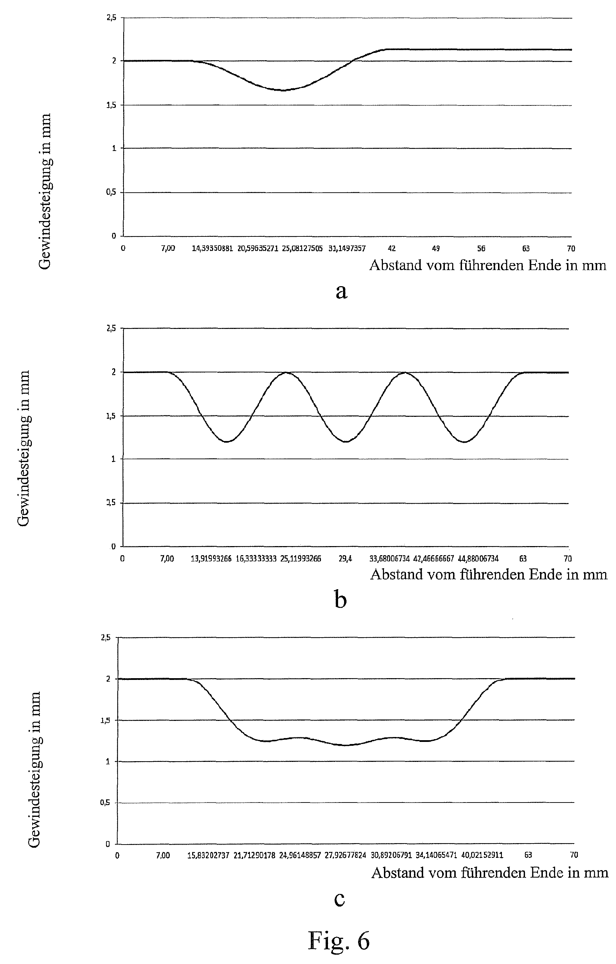

Figuren 6a bis 6c    Verläufe der Gewindesteigung von Spreizelementen gemäß weiterer Ausführungsformen entlang ihrer Gewindeabschnitte zeigen.

ZUSAMMENFASSUNG DER ERFINDUNG

Figur 1a zeigt ein erfindungsgemäßes Spreizelement 10 gemäß einer bevorzugten Ausführungsform, das für eine Verankerung in einem Bohrloch mit einem erfindungsgemäßen Verankerungssystem (nicht gezeigt) in ein Hülsenelement (nicht gezeigt) aus Kunststoff, beispielsweise einen Dübel, eingeschraubt werden kann, wobei das Hülsenelement in das Bohrloch einzusetzen ist. Da es sich bei dem Hülsenelement um einen an sich vorbekannten Dübel handeln kann, ist es in Fig. 1a nicht explizit gezeigt. Das Spreizelement 10 umfasst einen Gewindeabschnitt 12 mit einem ersten Abschnitt 14 und einem zweiten Abschnitt 16. Auf dem ersten Abschnitt 14 hat der Gewindeabschnitt 12 eine erste Gewindesteigung, die größer als eine zweite Gewindesteigung auf dem zweiten Abschnitt 16 ist. Wie in Figur 1a zu sehen ist, erstreckt sich das Spreizelement 10 in eine axiale Richtung A und weist entlang dieser Richtung ein führendes Ende 18 und ein gegenüberliegendes hinteres bzw. nachlaufendes Ende 20 auf. In der in Figur 1a dargestellten Ausführungsform des Spreizelements 10 befindet sich der erste Abschnitt 14 näher an dem führenden Ende 18 als der zweite Abschnitt 16. Das Spreizelement 10 wird in dieser Ausführungsform mithin durch eine Schraube mit veränderlicher Gewindesteigung gebildet.

Das Diagramm der Figur 1b zeigt den Verlauf der Gewindesteigung des Spreizelements 10 aus Figur 1a, wobei auf der y-Achse die Gewindesteigung bzw. Ganghöhe in Millimetern und auf der x-Achse der Abstand vom führenden Ende 18 in Millimetern angegeben ist. Wie anhand der Figur 1b zu erkennen ist, hat der erste Abschnitt 14 eine Länge von etwa 35 mm und grenzt direkt an das führende Ende 18 an. Die erste Gewindesteigung auf dem ersten Abschnitt 14 ist konstant und beträgt 2 mm. An den ersten Abschnitt 14 schließt ein Übergangsabschnitt an, auf dem die Gewindesteigung von 2 mm in einem Abstand von 35 mm vom führenden Ende 18 kontinuierlich auf einen Wert von 1,25 mm in einem Abstand von etwa 50 mm vom führenden Ende 18 abfällt. An den Übergangsabschnitt schließt sich in Richtung des hinteren Endes 20 des Spreizelements 10 der zweite Abschnitt 16 an, auf dem die zweite Gewindesteigung einen konstanten Wert von 1,25 mm aufweist. Die Gesamtlänge des Gewindeabschnitts 12, der den ersten Abschnitt 14, den zweiten Abschnitt 16 und den dazwischen liegenden Übergangsabschnitt umfasst, beträgt 70 mm.

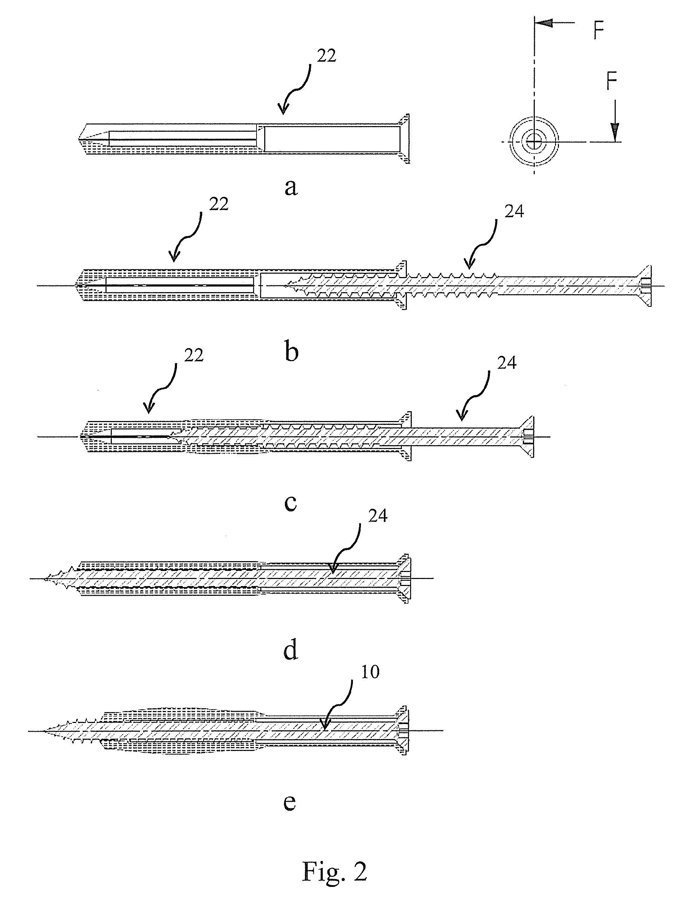

Figur 2a zeigt eine Schnittansicht eines herkömmlichen Kunststoffdübels 22, der ein Beispiel für ein Hülsenelement darstellt, das Teil eines erfindungsgemäßen Systems sein kann.

Figuren 2b - 2d zeigen eine Abfolge von Schnittansichten, bei denen eine herkömmliche Schraube 24 in den Dübel 22 eingeschraubt wird. Bei der herkömmlichen Schraube 24 ist die Gewindesteigung über die gesamte Länge des Gewindeabschnittes, der in den Dübel 22 einzuschrauben ist, konstant. In der Abfolge der Figuren 2b - 2d kann nachvollzogen werden, wie der Kunststoffdübel 22 durch das Einschrauben der Schraube aufgespreizt wird. Insbesondere ist in Figur 2d zu erkennen, dass der Kunststoffdübel 22 bei vollständig eingeschraubter Schraube 24 in dem gesamten Bereich, der den Gewindeabschnitt der Schraube 24 aufnimmt, gleichmäßig radial gespreizt ist.

Figur 2e zeigt zum Vergleich einen Fall, bei dem eine Schraube 10 von der Art, wie sie in Figur 1a gezeigt ist, zusammen mit dem Kunststoffdübel 22 verwendet wird. Bei dieser Ausführungsform ist der erste Abschnitt, der die größere Gewindesteigung aufweist, näher am führenden Ende der Schraube 10 angeordnet, als der zweite Abschnitt, in dem die Gewindesteigung geringer ist. Aufgrund seiner kleineren Gewindesteigung wird der nachlaufende zweite Abschnitt pro Umdrehung weniger weit in den Dübel 22 eingeschraubt, bzw. bewegt er sich "langsamer" in Bezug auf den Dübel 22 als der führende erste Abschnitt. Dadurch wird das Hülsenelement axial in Richtung auf das nachlaufende Ende verspannt. Dies ist in Figur 2e daran zu erkennen, dass der Dübel 22 gegenüber seiner Ursprungslänge (Figur 2a) verkürzt ist, d. h. gestaucht wird, wodurch eine Spreizung erzeugt wird, die größer als diejenige von Fig. 2d ist. Die im Vergleich zu dem herkömmlichen System von Figur 2d zusätzliche axiale Verspannung des Dübelmaterials, die zu einer Relativverschiebung zwischen der Außenfläche des Dübels 22 und der Bohrlochwand (in Fig. 2e nicht gezeigt) führt, bewirkt weiter die obengenannte "Verzahnung" der Außenfläche des Dübels 24 und der Bohrlochwand, die ihrerseits zu einer Erhöhung des Reibungswiderstandes zwischen der Bohrlochwand und dem aufgespreizten Dübel 22 führt.

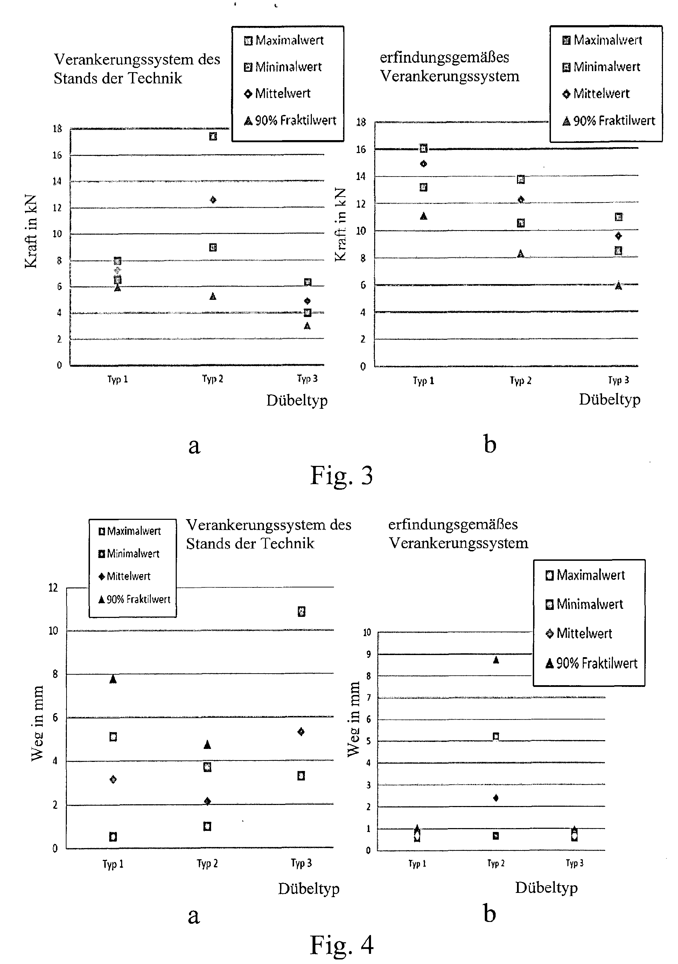

Im Folgenden werden die Qualifizierung eines erfindungsgemäßen Verankerungssystems und die eines Verankerungssystems des Standes der Technik beschrieben und einander gegenübergestellt. Die Ergebnisse der Qualifizierungsuntersuchungen sind in den Figuren 3 bis 5 graphisch dargestellt. Insgesamt wurden drei erfindungsgemäße Verankerungssysteme und drei Verankerungssysteme aus dem Stand der Technik getestet, wobei für jedes erfindungsgemäße Verankerungssystem das zuvor beschriebene Spreizelement 10 verwendet wurde, das anhand der Figuren 1 und 2 näher erläutert wurde, und für jedes Verankerungssystem des Standes der Technik eine herkömmliche Schraube verwendet wurde, die sich im Wesentlichen lediglich dadurch von dem Spreizelement 10 der Figuren 1 und 2 unterschied, dass sie keine veränderliche Gewindesteigung, sondern eine über ihren gesamten Gewindeabschnitt konstante Steigung aufwies.

Es wurden Verankerungssysteme mit drei verschiedenen Hülsenelementen getestet, nämlich mit Dübeln dreier verschiedener Hersteller, sodass jeweils drei verschiedene erfindungsgemäße Verankerungssysteme und drei verschiedene Verankerungssysteme des Standes der Technik getestet wurden. Die Dübel der drei verschiedenen Hersteller werden im Folgenden als Typ 1, Typ 2 und Typ 3 bezeichnet. Gemäß den vorgenannten Ausführungen hat jedes der drei erfindungsgemäßen getesteten Verankerungssysteme ein zugehöriges Verankerungssystem des Standes der Technik, das einen Dübel desselben Typs verwendet und eine Schraube mit dem selben Kerndurchmesser aber konstanter Gewindesteigung. Die für die Versuche verwendeten Dübeltypen bestehen aus den Polyamiden PA6 oder PA66, welche in Deutschland für Dübel zugelassene Kunststoffe sind.

Für die Versuche wurden Dübel mit einem Durchmesser von 10 mm verwendet, wobei die Dübel in ein etwa 55 mm tiefes Bohrloch in einem Verankerungsgrund aus Beton eingesetzt wurden. Zur Herstellung der zu testenden Verankerungssysteme wurden die Spreizelemente 10 der Erfindung und herkömmliche Schrauben aus dem Stand der Technik in die eingesetzten Dübel eingeschraubt. Um die Qualität der Verankerungssysteme zu testen, wurden mit einer Messvorrichtung die Spreizelemente 10 und die Schrauben mit einer im Wesentlichen konstanten Ziehgeschwindigkeit aus dem Verankerungsgrund herausgezogen. Gleichzeitig wurde der Weg gemessen, den das Spreizelement 10 bzw. die Schraube in Bezug auf die Ausgangsposition zurückgelegt hatte sowie die Kraft gemessen, die bei dem entsprechenden Weg an dem Spreizelement 10 bzw. an der Schraube anlag. Das Ergebnis jeder Messung bzw. jedes Ausziehversuches ist ein gemessener Verlauf, der in einem Kraft-Weg-Diagramm dargestellt werden kann.

In den Figuren 5a bis 5c sind gemessene Kraft-Weg-Verläufe in Kraft-Weg-Diagrammen dargestellt, wobei die Verläufe jeweils für das erfindungsgemäße Verankerungssystem und für ein Verankerungssystem des Standes der Technik gemessen wurden. Auf der y-Achse ist jeweils die Kraft in kN und auf der x-Achse der in Bezug auf die Ausgangsposition zurückgelegte Weg in Millimetern angegeben.

Die Figur 5a zeigt Messungen für Verankerungssysteme mit einem Dübel des Typs 1, die Figur 5b zeigt Messungen für Verankerungssysteme mit einem Dübel des Typs 2 und die Figur 5c zeigt Messungen für Verankerungssysteme mit einem Dübel des Typs 3. In den Figuren 5a bis 5c sind in dem oberen Kraft-Weg-Diagramm jeweils Messungen für Verankerungssysteme des Standes der Technik und in dem jeweils unteren Diagramm Messungen für erfindungsgemäße Verankerungssysteme dargestellt. In den Figuren 5a bis 5c sind für jeden Dübeltyp zehn Ausziehmessungen mit einer Schraube des Standes der Technik (jeweils oben in den Figuren 5a bis 5c) und fünf Ausziehmessungen mit dem Spreizelement 10 aus Figur 1a (jeweils unten in den Figuren 5a bis 5c) dargestellt. Wie anhand der Messverläufe der Figur 5 zu erkennen ist, nimmt bei einem Ausziehen mit konstanter Geschwindigkeit die anliegende Zugkraft direkt nach dem Beginn des Ausziehens vergleichsweise stark zu und erreicht einen maximalen Wert. Beim weiteren Ausziehen nimmt die anliegende Zugkraft nach und nach ab. Am rechten Ende der dargestellten Messverläufe nimmt die anliegende Kraft abrupt und stark ab. Dies ist der Punkt, in dem die Verankerung endgültig versagt und gelöst wird.

Für jede der in Figur 5a) bis c) dargestellten sechs Messreihen der sechs verschiedenen Verankerungssysteme wurden die Maximalwerte der Auszugskraft ermittelt, das heißt jeweils zehn Werte für die maximale Auszugskraft für jedes der drei getesteten Verankerungssysteme des Standes der Technik und jeweils fünf Werte für die maximale Auszugskraft für jedes der drei getesteten erfindungsgemäßen Verankerungssysteme. Figur 3 zeigt zwei Diagramme, in denen für jedes getestete Verankerungssystem der Maximalwert, der Minimalwert, der Mittelwert sowie der 95% - Fraktilwert der jeweils ermittelten Werte für die erreichte maximale Auszugskraft dargestellt sind. Die Figur 3a zeigt diese Werte für die drei Verankerungssysteme des Stands der Technik und die Figur 3b zeigt diese Werte für die drei erfindungsgemäßen Verankerungssysteme. Auf den x-Achsen sind jeweils die Typen der zugehörigen Verankerungssysteme angegeben und auf der y-Achse die Kraft in kN.

Der Fraktilwert wird verwendet, um aufgrund einer gemessenen Werteverteilung für die Größe weitere Messwerte zu liefern und kann als Qualitätskriterium des gemessenen Systems herangezogen werden. Der 95% - Fraktilwert gibt denjenigen aus einer gemessenen Werteverteilung ermittelten Wert an, der mit 90%-iger Wahrscheinlichkeit bei einer weiteren Messung nicht unterschritten wird. Der 95% - Fraktilwert F wurde nach folgender Formel berechnet:

$$F = \bar{x} - k \times \sigma$$

Dabei ist $\bar{x}$ der Mittelwert der zugrundeliegenden Messwerte, $\sigma$ die Standardabweichung der zugrundeliegenden Messwerte und k ein Faktor, der für zehn Messversuche bzw. Messwerte den Wert von 2,57 und bei fünf Messversuchen bzw. Messwerten den Wert von 3,4 hat.

Anhand der Figur 3 ist zu erkennen, dass die ermittelten 95 % - Fraktilwerte für die maximale Auszugskraft bei den erfindungsgemäßen Verankerungssystemen erheblich und signifikant größer sind, als die ermittelten Fraktilwerte der entsprechenden Verankerungssysteme des Standes der Technik mit dem gleichen Dübeltyp. Die ermittelten Fraktilwerte sind in der folgenden Tabelle gegenübergestellt:

| Dübeltyp (rechts) / Verankerungssystem (unten) | Typ 1 | Typ 2 | Typ 3 |
|---|---|---|---|
| Stand der Technik | 5,94 | 5,24 | 2,99 |
| Erfindung | 11,1 | 8,31 | 5,91 |
| 95% - Fraktilwert für die maximale Auszugskraft in kN | | | |

Der maximale Wert der Auszugskraft, den die Messvorrichtung während jeder der genannten Messungen gemessen hat bzw. den die Messvorrichtung während des Ausziehens aufwenden musste, ist gleichzeitig diejenige Kraft, die das gemessene Verankerungssystem dem Ausziehen entgegengesetzt hat. Je höher diese Kraft ist, desto höher ist der Ausziehwiderstand des Systems. Anhand der oben in der Tabelle dargestellten Werte wird deutlich, dass mit Hilfe einer sich verändernden Gewindesteigung bei einem Spreizelement der Ausziehwiderstand für ein Verankerungssystem erheblich erhöht werden kann.

Wie es zuvor für die maximale Auszugskraft beschrieben wurde, so wurde auch für jede der in Figur 5 dargestellten Messverläufe der Wert für den Weg ermittelt, den das Spreizelement 10 bzw. die Schraube beginnend von der Ausgangsposition bis zum Erreichen der maximalen Auszugskraft zurückgelegt hat. Dieser Weg kann als Maß für die Ausziehsteifigkeit verwendet werden. Entsprechend der vorhergehenden Beschreibung wurden für jedes der sechs getesteten Verankerungssysteme der Maximalwert, der Minimalwert, der Mittelwert und der 95 % - Fraktilwert der zugehörigen Werte für die Wege bis zum Erreichen der Maximalkraft ermittelt. Diese Werte sind in Figur 4 dargestellt, wobei in Figur 4a die jeweiligen Werte für die drei Verankerungssysteme des Standes der Technik und in Figur 4b die jeweiligen Werte für die erfindungsgemäßen Verankerungssysteme abgebildet sind. Die 95 % - Fraktilwerte für den Weg bis zum Erreichen der Maximalkraft sind in der folgenden Tabelle aufgeführt:

| Dübeltyp (rechts) / Verankerungssystem (unten) | Typ 1 | Typ 2 | Typ 3 |
|---|---|---|---|
| Stand der Technik | 3,16 | 2,12 | 5,30 |
| Erfindung | 1,02 | 8,74 | 0,94 |
| 95% - Fraktilwert für den Weg bis zur Erreichung der maximalen Auszugskraft in mm | | | |

Anhand der oben aufgeführten Werte und der Darstellungen der Figuren 4 und 5 ist zu erkennen, dass mit dem erfindungsgemäßen Verankerungssystem bei den Dübeln vom Typ 1 und vom Typ 3 die bis zum Erreichen der Maximalkraft zurückgelegte Wegdifferenz des Spreizelements 10 erheblich reduziert werden konnte. Diese Verankerungssysteme weisen somit eine vergleichsweise hohe Ausziehsteifigkeit auf. Die Ausführungsform mit dem Dübel vom Typ 2 zeigt insofern ein besonderes Verhalten, als zwar auch hier die Kraft im Verlaufe einer relativ kurzen Wegstrecke von weniger als 1 mm rapide ansteigt, dann aber nicht kontinuierlich abfällt, sondern sich in manchen Fällen erst nach etwas mehr als 5 mm das globale Maximum erreicht. Dies ändert aber nichts daran, dass auch diese Ausführungsform ein im Grunde steifes Auszugsverhalten zeigt, in dem innerhalb einer Wegstrecke von etwa 1 mm bereits ein Wert erreicht wird, der zumindest fast dem Maximum entspricht.

Die durchgeführten Messungen zeigen deutlich, dass mit dem erfindungsgemäßen Verankerungssystem der Ausziehwiderstand und die Ausziehsteifigkeit verbessert werden können.

Es ist zu beachten, dass das Spreizelement 10 aus den Figuren 1 und 2 lediglich ein Beispiel für eine erfindungsgemäße Ausführungsform ist und dass die Erfindung auch andere Ausführungsformen mit anderen Verläufen der Gewindesteigung umfasst.

Gewindesteigungen von anderen erfindungsgemäßen beispielhaften Ausführungsformen sind in den Figuren 6a bis 6c angegeben. Wie der Figur 6 zu entnehmen ist, kann die Gewindesteigung am führenden Ende kleiner sein als am hinteren Ende des Gewindeabschnitts (Figur 6a), sich abschnittsweise mit einem periodischen Verlauf verändern (Figur 6b) oder im führenden Bereich des Gewindeabschnitts und im gegenüberliegenden hinteren Bereich des Gewindeabschnitts im Wesentlichen übereinstimmen und dazwischen abschnittsweise geringer sein (Figur 6c). In vielen Fällen ist es vorteilhaft, wenn die Gewindesteigung an einer Stelle, die nicht am Rand des Gewindeabschnitts liegt, ein lokales Minimum hat. Im Bereich des lokalen Minimums der Gewindesteigung wird das Hülsenelement gestaucht, was eine zusätzliche Aufspreizung und geometrische Verzahnung bzw. "Verkrallung" des Hülsenelementes mit der Bohrlochwand erzeugt. Ein solches lokales Minimum findet sich in allen drei Ausführungsformen von Fig. 6a, 6b und 6c.

Fig. 6b zeigt dabei eine Ausführungsform einer Mehrzahl von lokalen Minima, konkret mit einer periodischen Modulation der Gewindesteigung. Auf diese Art werden mehrere gestauchte Stellen entlang der Länge der Hülse erzeugt.

Fig. 6c zeigt eine Ausführungsform, bei der ein Abschnitt niedrigerer Steigung vorliegt, bei dem über eine gewisse Länge l die Steigung geringer ist als an den Enden bzw. der Mittelwert der Steigungen an den Enden des Gewindeabschnitts.

Wie in Fig. 6c gezeigt ist, kann dieser Bereich niedrigerer Steigung einen erheblichen Teil der Gesamtlänge des Gewindeabschnittes ausmachen, beispielsweise mehr als 20%, vorzugsweise sogar 40%.

Es wird weiterhin darauf hingewiesen, dass die zuvor beschriebenen Ausführungsformen als rein beispielhaft und die Erfindung nicht einschränkend anzusehen sind. Die beschriebenen Merkmale können in beliebiger Kombination von Bedeutung sein.

**Bezugszeichenliste**

| | |
|---|---|
| 10 | Spreizelement |
| 12 | Gewindeabschnitt |
| 14 | erster Abschnitt |
| 16 | zweiter Abschnitt |
| 18 | führendes Ende |
| 20 | hinteres Ende |
| 22 | Hülsenelement |
| 24 | herkömmliche Schraube |

**Patentansprüche**

1. Verankerungssystem zur Verankerung in einem Bohrloch, das folgendes umfasst:

   ein Hülsenelement, das zumindest teilweise aus Kunststoff besteht, zum Einsetzen in ein Bohrloch,
   ein Spreizelement (10) mit einem Gewindeabschnitt (12), der in das Hülsenelement einschraubbar ist, wobei das Spreizelement (10) geeignet ist, das Hülsenelement bei einem Einschrauben radial zu spreizen, **dadurch gekennzeichnet, dass** der Gewindeabschnitt (12) eine Gewindesteigung aufweist, die sich entlang des Gewindeabschnitts (12) verändert.

2. Verankerungssystem nach Anspruch 1, bei dem der Gewindeabschnitt (12) einen ersten Abschnitt (14) mit einer ersten Gewindesteigung und einen zweiten Abschnitt (16) mit einer zweiten Gewindesteigung aufweist, wobei die zweite Gewindesteigung kleiner als die erste Gewindesteigung ist.

3. Verankerungssystem nach Anspruch 2, bei dem die erste und/oder die zweite Gewindesteigung im Wesentlichen konstant sind.

4. Verankerungssystem nach einem der Ansprüche 2 oder 3, bei dem der erste Abschnitt (14) näher an einem führenden Ende (18) des Spreizelements (10) angeordnet ist als der zweite Abschnitt (14), oder bei dem der zweite Abschnitt (16) näher an einem führenden Ende (18) des Spreizelements (10) angeordnet ist als der erste Abschnitt (14).

5. Verankerungssystem nach einem der Ansprüche 2 bis 4, bei dem der Gewindeabschnitt (12) weiterhin einen Übergangsabschnitt aufweist, der zwischen dem ersten (14) und dem zweiten Abschnitt (16) angeordnet ist und auf dem die Gewindesteigung in Richtung auf den zweiten Abschnitt (16) abnimmt, insbesondere kontinuierlich abnimmt.

6. Verankerungssystem nach einem der Ansprüche 2 bis 5, bei dem die Länge des ersten Abschnitts (14) zwischen 50% und 70%, insbesondere etwa 60% der Länge des Gewindeabschnitts (12) beträgt, und/oder bei dem die Länge des zweiten Abschnitts (16) zwischen 10% und 30%, insbesondere etwa 20% der Länge des Gewindeabschnitts (12) beträgt.

7. Verankerungssystem nach einem der Ansprüche 5 oder 6, bei dem die Länge des Übergangsabschnitts zwischen 10% und 30%, insbesondere etwa 20% der Länge des Gewindeabschnitts (12) beträgt.

8. Verankerungssystem nach einem der Ansprüche 2 bis 7, bei dem die zweite Gewindesteigung 85% oder weniger, vorzugsweise 70% oder weniger der ersten Gewindesteigung beträgt, und/oder 40% oder mehr, vorzugsweise 55% oder mehr der ersten Gewindesteigung beträgt.

9. Verankerungssystem nach einem der Ansprüche 1 bis 6, bei dem die Gewindesteigung in dem Gewindeabschnitt (12) an einer Stelle, die sowohl vom führenden Ende als auch vom nachlaufenden Ende des Gewindeabschnittes beabstandet ist, ein lokales Extremum, insbesondere ein lokales Minimum hat, wobei die Gewindesteigung vorzugsweise zwei oder mehr lokale Extrema, insbesondere lokale Minima aufweist.

10. Verankerungssystem nach einem der Ansprüche 1 bis 5, bei dem der Gewindeabschnitt (12) eine Länge L hat und die Steigung am führenden Ende des Gewindeabschnitts einen Wert $p_1$, am nachlaufenden Ende des Gewindeabschnitts einen Wert $p_2$ und eine minimale Steigung $p_{min}$ aufweist, die kleiner als $p_1$ und $p_2$ ist, wobei der Gewindeabschnitt (12) einen Abschnitt niedriger Steigung aufweist, innerhalb dessen für die Gewindesteigung p gilt:

$$p \leq p_{min} + \left( \frac{p_1+p_2}{2} - p_{min} \right) * 0{,}7,$$

vorzugsweise

$$p \leq p_{min} + \left( \frac{p_1+p_2}{2} - p_{min} \right) * 0{,}4,$$

wobei für die Länge 1 dieses Abschnitts niedriger Steigung gilt:

1 ≥ 0,2 * L, vorzugsweise 1 ≥ 0,4 * L und 1 ≤ 0,9 * L, vorzugsweise 1 ≤ 0,75 * L.

11. Verankerungssystem nach einem der vorhergehenden Ansprüche, bei dem die Gewindesteigung zumindest eine abrupte Änderung aufweist.

12. Verankerungssystem nach Anspruch 1, bei dem sich die Gewindesteigung entlang des Gewindeabschnitts (12) kontinuierlich verändert, insbesondere im Wesentlichen entlang des gesamten Gewindeabschnitts (12) kontinuierlich verändert.

13. Verankerungssystem nach einem der vorhergehenden Ansprüche, bei dem das Hülsenelement ein Dübel aus einem Polyamid, insbesondere aus dem Polyamid PA6 und/oder aus dem Polyamid PA66 ist, und/oder bei dem das Spreizelement (10) eine Schraube, insbesondere eine Stahlschraube ist.

14. Verfahren zum Befestigen eines Objektes an einem Verankerungsgrund, mit den folgenden Schritten:

- Einsetzen eines Hülsenelements, das zumindest teilweise aus Kunststoff besteht, in ein Bohrloch,
- Befestigen des Objekts an dem Verankerungsgrund mit Hilfe eines Spreizelementes (10) mit einem Gewindeabschnitt (12), indem das Spreizelement (10) in das Hülsenelement eingeschraubt wird, um das Hülsenelement radial zu spreizen,

wobei der Gewindeabschnitt (12) eine Gewindesteigung aufweist, die sich entlang des Gewindeabschnittes (12) ändert.

15. Verfahren nach Anspruch 14, bei dem ein Verankerungssystem nach einem der Ansprüche 2 bis 13 verwendet wird.

Claims

1. An anchoring system for anchoring in a drill hole, comprising:

a sleeve element which consists at least in some sections of plastics material and

can be inserted into a drill hole,

an expansion element (10) comprising a threaded portion (12) which can be screwed into the sleeve element, the expansion element (10) being suitable for radially expanding the sleeve element during the screwing action, **characterised in that**

the threaded portion (12) has a thread pitch which varies along the threaded portion (12).

2. The anchoring system as claimed in claim 1, in which the threaded portion (12) comprises a first portion (14) with a first thread pitch and a second portion (16) with a second thread pitch, the second thread pitch being smaller than the first thread pitch.

3. The anchoring system as claimed in claim 2, in which the first and/or the second thread pitch are substantially constant.

4. The anchoring system as claimed in either of claims 2 or 3, in which the first portion (14) is located closer to a leading end (18) of the expansion element (10) than the second portion (14), or
in which the second portion (16) is located closer to a leading end (18) of the expansion element (10) than the first portion (14).

5. The anchoring system as claimed in any of claims 2 to 4, in which the threaded portion (12) also comprises a transitional section which is located between the first (14) and second portion (16) and in which the thread pitch reduces, and in particular reduces continuously, towards the second portion (16).

6. The anchoring system as claimed in one of claims 2 to 5, in which the length of the first portion (14) is between 50 % and 70 %, in particular about 60 %, of the length of the threaded portion (12), and/or
in which the length of the second portion (16) is between 10 % and 30 %, in particular about 20 %, of the length of the threaded portion (12).

7. The anchoring system as claimed in claims 5 or 6, in which the length of the transitional section is between 10 % and 30 %, in particular about 20 %, of the length of the threaded portion (12).

8. The anchoring system as claimed in any of claims 2 to 7, in which the second thread pitch is 85 % or less, preferably 70 % or less, of the first thread pitch, and/or 40 % or more, preferably 55 % or more, of the first thread pitch.

9. The anchoring system as claimed in any of claims 1 to 6, in which the thread pitch has a local extremum, especially a local minimum, in the threaded portion (12) in a position which is spaced apart both from the leading end and from the trailing end of the threaded portion
in which the thread pitch has preferably two or more local extrema, in particular local minima.

10. The anchoring system as claimed in any of claims 1 to 5, in which the threaded portion (12) has a length L and the pitch at the leading end of the threaded portion has a value $p_1$, at the trailing end of the threaded portion a value $p_2$ and a minimum pitch $p_{min}$, which is smaller than $p_1$ and $p_2$,
wherein the threaded portion (12) has a section of low pitch, within which the following applies to the thread pitch p:

$$p \leq p_{min} + \left(\frac{p_1 + p_2}{2} - p_{min}\right) * \ 0.7,$$

preferably

$$p \leq p_{min} + \left(\frac{p_1 + p_2}{2} - p_{min}\right) * \ 0.4,$$

wherein the following applies for the length 1 of that section of low pitch:

1 ≥ 0.2 * L, preferably 1 ≥ 0.4 * L and 1 ≤ 0.9 * L, preferably 1 ≤ 0.75 * L.

11. The anchoring system as claimed in any of the preceding claims, in which the thread pitch includes at least one abrupt change.

**12.** The anchoring system as claimed in claim 1, in which the thread pitch varies continuously along the threaded portion (12); in particular, it varies continuously along substantially the entire threaded portion (12).

**13.** The anchoring system as claimed in any of the preceding claims, in which the sleeve element is a dowel made of a polyamide, especially the polyamide PA6 and/or the polyamide PA66, and/or,
in which the expansion element (10) is a screw, especially a steel screw.

**14.** A method of fastening an item to an anchoring base, comprising the following steps:

- inserting a sleeve element which consists at least in some sections of plastics material, into a drill hole,
- fastening the item to the anchoring base with the aid of an expansion element (10) comprising a threaded portion (12), by screwing the expansion element (10) into the sleeve element in order to expand the sleeve element radially,

wherein the threaded portion (12) has a thread pitch which varies along the threaded portion (12).

**15.** The method as claimed in claim 14, in which an anchoring system as claimed in any of claims 2 to 13 is used.

**Revendications**

**1.** Système d'ancrage destiné à l'ancrage dans un trou percé, qui comprend les éléments suivants :

un élément de manchon, qui se compose au moins partiellement de matière plastique, pour l'insertion dans un trou percé,
un élément à expansion (10) avec un tronçon fileté (12) qui peut être vissé dans l'élément de manchon, l'élément à expansion (10) étant approprié pour provoquer une expansion radiale de l'élément de manchon lors du vissage, **caractérisé en ce que**
le tronçon fileté (12) présente un pas de filetage qui varie le long du tronçon fileté (12).

**2.** Système d'ancrage selon la revendication 1, dans lequel le tronçon fileté (12) présente un premier tronçon (14) avec un premier pas de filetage et un deuxième tronçon (16) avec un deuxième pas de filetage, le deuxième pas de filetage étant plus petit que le premier pas de filetage.

**3.** Système d'ancrage selon la revendication 2, dans lequel le premier et/ou le deuxième pas de filetage sont essentiellement constants.

**4.** Système d'ancrage selon l'une des revendications 2 ou 3, dans lequel le premier tronçon (14) est disposé plus près sur une extrémité avant (18) de l'élément à expansion (10) que le deuxième tronçon (14), ou dans lequel le deuxième tronçon (16) est disposé plus près sur une extrémité avant (18) de l'élément à expansion (10) que le premier tronçon (14).

**5.** Système d'ancrage selon l'une des revendications 2 à 4, dans lequel le tronçon fileté (12) présente en outre un tronçon de transition qui est disposé entre le premier tronçon (14) et le deuxième tronçon (16) et sur lequel le pas de filetage diminue en direction du deuxième tronçon (16), en particulier diminue de façon continue.

**6.** Système d'ancrage selon l'une des revendications 2 à 5, dans lequel la longueur du premier tronçon (14) représente entre 50 % et 70 %, en particulier environ 60 % de la longueur du tronçon fileté (12), et/ou dans lequel la longueur du deuxième tronçon (16) représente entre 10 % et 30 %, en particulier environ 20 % de la longueur du tronçon fileté (12).

**7.** Système d'ancrage selon l'une des revendications 5 ou 6, dans lequel la longueur du tronçon de transition représente entre 10 % et 30 %, en particulier environ 20 % de la longueur du tronçon fileté (12).

**8.** Système d'ancrage selon l'une des revendications 2 à 7, dans lequel le deuxième pas de filetage représente 85 % ou moins, de préférence 70 % ou moins, du premier pas de filetage, et/ou 40 % ou plus, de préférence 55 % ou plus, du premier pas de filetage.

**9.** Système d'ancrage selon l'une des revendications 1 à 6, dans lequel le pas de filetage, à un endroit qui est espacé aussi bien de l'extrémité avant que de l'extrémité aval du tronçon fileté (12), a un extremum localisé, en particulier un minimum localisé, le pas de filetage présentant de préférence deux extrema localisés ou davantage, en particulier des minima localisés.

**10.** Système d'ancrage selon l'une des revendications 1 à 5, dans lequel le tronçon fileté (12) a une longueur L, et le pas présente une valeur $p_1$ à l'extrémité avant du tronçon fileté, une valeur $p_2$ à l'extrémité aval du tronçon fileté, et un pas minimal $p_{min}$ qui est inférieure à $p_1$ et à $p_2$, le tronçon fileté (12) présentant un tronçon de pas plus faible, à l'intérieur duquel on a, pour le pas de filetage p :

$$p \leq p_{min} + \left( \frac{p_1 + p_2}{2} - p_{min} \right) * 0{,}7,$$

de préférence

$$p \leq p_{min} + \left( \frac{p_1 + p_2}{2} - p_{min} \right) * 0{,}4,$$

et, pour la longueur 1 de ce tronçon de pas plus faible, on a :

1≥0,2 * L, de préférence 1≥0,4 * L, et 1≤0,9 * L, de préférence 1≤0,75 * L.

**11.** Système d'ancrage selon l'une des revendications précédentes, dans lequel le pas de filetage présente au moins une variation abrupte.

**12.** Système d'ancrage selon la revendication 1, dans lequel le pas de filetage varie de façon continue le long du tronçon fileté (12), en particulier varie essentiellement de façon continue le long de la totalité du tronçon fileté (12).

**13.** Système d'ancrage selon l'une des revendications précédentes, dans lequel l'élément de manchon est une cheville en polyamide, en particulier en polyamide PA6 et/ou en polyamide PA66, et/ou dans lequel l'élément à expansion (10) est une vis, en particulier une vis en acier.

**14.** Procédé destiné à la fixation d'un objet sur un fond d'ancrage, avec les étapes suivantes :

- introduction dans un trou percé d'un élément de manchon qui se compose au moins en partie de matière plastique,
- fixation de l'objet sur le fond d'ancrage à l'aide d'un élément à expansion (10) avec un tronçon fileté (12), par le fait que l'élément à expansion (10) est vissé dans l'élément de manchon pour provoquer une expansion radiale de l'élément de manchon,

le tronçon fileté (12) présentant un pas de filetage qui varie le long du tronçon fileté (12).

**15.** Procédé selon la revendication 14, dans lequel un système d'ancrage selon l'une des revendications 2 à 13 est utilisé.

Fig. 1a

Abstand vom führenden Ende in mm

Fig. 1b

Fig. 2

Fig. 3

Fig. 4

## Dübel des Typs 1

Fig. 5 a

Dübel des Typs 2

Fig. 5 b

## Dübel des Typs 3

Fig. 5 c

a

b

c

Fig. 6

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1895173 A2
- EP 0171745 A1